# EUROPEAN PATENT SPECIFICATION

(11) **EP 1 882 756 B1**
(45) Date of publication and mention of the grant of the patent: **11.01.2012**
(21) Application number: 06117901.6
(22) Date of filing: 26.07.2006
(51) Int. Cl.: C22C 38/18

(54) **Ferritic chromium steel**
Ferritischer Stahl mit hohem Chromgehalt
Acier ferritique à haute teneur en chrome

(43) Date of publication of application: 30.01.2008
(73) Proprietor: Sandvik Intellectual Property AB, 811 81 Sandviken (SE); Topsoe Fuel Cell A/S, 2800 Kongens Lyngby (DK)
(72) Inventor: Schuisky, Mikael, 81134 Sandviken (SE); Gutzon Larsen, Jørgen, 2800 Bagsaerd (DK); Christiansen, Niels, 2820 Gentofte (DK); Mikkelsen, Lars, 4000 Roskilde (DK)
(74) Representative: Hägglöf, Henrik

(56) References cited:
- EP-A- 1 298 228
- EP-A- 1 484 424
- EP-A- 1 536 031
- EP-A- 1 600 520
- US-A1- 2004 094 240
- PATENT ABSTRACTS OF JAPAN vol. 1998, no. 09, 31 July 1998 (1998-07-31) -& JP 10 088285 A (NIPPON YAKIN KOGYO CO LTD), 7 April 1998 (1998-04-07)

## Description

The present invention relates generally to a ferritic chromium stainless steel. Furthermore, the present invention relates to the use of said steel in fuel cells, such as solid oxide fuel cells (SOFC). In particular, it relates to a ferritic chromium steel suitable for the use as interconnects or bipolar plates in solid oxide fuel cells or other high temperature applications in which a conducting surface is needed.

### BACKGROUND

Solid Oxide Fuel Cells operates at elevated temperatures from 500 °C up to 900°C and the materials inside the cell are subjected to corrosive gases used as fuel. Therefore, when selecting material to SOFC applications, several different properties, such as thermal expansion, corrosion resistance, mechanical properties etc., are to be considered. The thermal expansion of a steel for an interconnect in a SOFC needs to closely match the thermal expansion of the ceramic components which build up the anode, electrolyte and the cathode in order to avoid cracking of any of these components during thermal cycling. The interconnect material also needs to have a good corrosion resistance to avoid the growth of a too thick oxide scale which will increase the overall resistance of the cell. Furthermore, the formed oxide scale, even though thin, must be electrically conducting i.e. insulating oxide formers such as Al should be avoided in the steel. The mechanical strength of the steel will give stability of the whole fuel cell stack when put together.

Ferritic chromium steels are generally used for applications with high requirements on high temperature corrosion resistance. The thermal expansion of this type of steels is close to the thermal expansion of the electro-active ceramic materials used in the SOFC stack, such as yttrium-stabilized zirconia (YSZ) which is the common material used as electrolyte in the fuel cell, and are therefore considered an appropriate choice for this application.

It is desired that the oxide scale formed on the steel interconnect material does not spall off or crack due to thermal cycling since this may cause unwanted catastrophic corrosion of the steel. This means that the oxide scale formed on the surface of the material should have good adhesion to the material. The oxide scale should also have good electrical conductivity and not grow too thick during the life time of the fuel cell, since thicker oxide scales will lead to an increased electrical resistance. The formed oxide should also be chemically resistant to the gases used as fuels in an SOFC, i.e., no volatile metal-containing species such as chromium oxyhydroxides should be formed. Volatile species such as chromium oxyhydroxide will contaminate the electro-active ceramic materials in a SOFC stack, which will lead to a decrease in the efficiency of the fuel cell.

Most commercially available ferritic chromium steels are alloyed with aluminum and/or silicon. These alloying elements form Al₂O₃ and/or SiO₂ at the working temperature of the SOFC. Both these oxides are electrically insulating oxides, which will increase the electrical resistance of the cell and lower the fuel cell efficiency. This has led to the development of ferritic steels with low AI and Si contents, to ensure good conductivity of the formed oxide scales. These newly developed steels are usually also alloyed with manganese. The addition of Mn in the steel will induce the formation of chromium oxide based spinel structures in the formed oxide scale. However, Mn in general has a poor effect on the corrosion resistance of the steel; it is therefore desirable that the Mn content in the steel be monitored carefully at low levels. Too high concentration of Mn in the steel will lead to the growth of thick oxide scales due to severe high temperature corrosion.

In addition to Mn, several of these new developed steels are alloyed with group III elements, i.e., Sc, La and Y and/or other rare earth elements (REM). The addition of La, Y or REM is made to increase the lifetime of the material at high temperatures. Strong oxide formers such as La, Y and REM are said to decreases the oxygen ion mobility in the formed Cr₂O₃ scale, which will lead to a decrease in the growth rate of the oxide scale.

One example of a chromium steel for use in SOFC is described in patent application US 2003/0059335, wherein the steel contains 12-28 % Cr, 0,01-0,4 % La, 0,2-1,0 % Mn, 0,05-0,4 % Ti, less than 0,2 % Si and less than 0,2 % Al.

EP 1 600 520 A1 discloses another example of a chromium steel for use in SOFC containing 20-25 % Cr, up to 0,5 % Mn, Zr+Hf 0,001-0,1 %, up to 0,4 % Si and up to 0,4 % Al.

Also, in patent application EP 1 298 228 A2 a steel for use in SOFC is described. This steel contains 15-30 % Cr, not more than 1,0 % Mn, up to 1 % Si and at least one of Y up to 0,5 %, REM up to 0,2 and Zr up to 1 %.

Yet another example of a ferritic steel for SOFC is described in US 6,294,131 B1. The steel contains 18-28,5 % Cr, 0,005-0,10 % Mn, up to 0,1 % Si and 0,005-0,50 % REM.

Moreover, ferritic steels for use in SOFC are disclosed in Leszek Niewolak et al., "Development of High Strength Ferritic Steel for Interconnect Application in SOFCs", 7th European SOFC Forum, Session B08, Wednesday 5 July 2006, 16:45h, File No. B084. It was found that additions of Nb and W to high Cr ferritic steels could develop finely dispersed laves phase precipitates.

EP-A-1 536 031 discloses a ferritic steel for solid-oxide fuel cells containing C ≤ 0.20%, Si 0.02-1.0%, Mn ≤ 2.0%, Cr 10-40%, Mo 0.03-5%, Nb 0.1-3% and at least one of Sc, Y, La, Ce, Pr, Nd, Pm, Sm, Zr and Hf up to 1.0% in total.

The object of the invention is to provide an alternative steel suitable for use in solid oxide fuel cells.

### SUMMARY

The object of the invention is accomplished by a ferritic chromium steel as defined in claim 1, which provides a material appropriate for use in Solid oxide fuel cells, especially as interconnect. The composition of the ferritic chromium steel enables a very good corrosion resistance, a proper thermal expansion, a good adhesion of the oxide formed on the surface of the material and especially a very low contact resistance.

The composition of the steel enables the Si present in the steel to be bound into particles rich in Si. More specifically, the steel comprises Si rich particles comprising Mo and Nb. The presence of these particles minimizes the risk of Si diffusing to the surface and forming silicon oxides. By forming these silicon rich particles the formation of a silicon oxide rich part of the oxide scale under the chromium oxide is avoided. The reduce formation of silicon oxides at the oxide scale is believed to be the main reason for the low degradation rate of the contact resistance for these alloys. Hence, the composition in accordance with the present invention also enables a much higher Si content than previously considered appropriate for the application solid oxide fuel cells which also enables a more cost efficient manufacturing process since there is no need for suppressing the Si content in the melt. However, not only the addition of Mo and Nb is needed for forming silicon rich particles it is also essential for the application as interconnect in solid oxide fuel cell to also add Zr and/or Ti to the alloy of invention. The Zr and/or Ti will first of all ensure a well adherent oxide scale but it may also improve the silicon rich particle formation inside the steel matrix.

Even though the ferritic chromium steel in accordance with the present invention is developed primarily for usage in Solid Oxide Fuel Cells, it is expected that it can also be used in other types of fuel cells such as Polymer Electrolyte Membrane cells (PEM).

### BREIF DESCRIPTION OF THE DRAWINGS

Figure 1 illustrates the area specific resistance as a function of time for the three melts A, B & C of the alloy of invention compared with model alloy 5.
Figure 2 illustrates the SEM/EDS mapping of Mo, Nb and Si of melt C of the alloy of invention.
Figure 3 illustrates the SEM/EDS mapping of a commercial ferritic 22% chromium steel with no addition of Mo and Nb.

### DETAILED DESCRIPTION

The contribution of the different elements is described below. All percentage figures are in percent by weight.

Carbon (C) when added can increase the higher temperature strength by forming carbides with certain metal such as Mo. However, in this application the carbon content should be kept low so that the added commonly known metal carbide formers such as Mo, Nb, Ti and Zr are unbounded in the metal matrix. Therefore, the content of carbon should be max 0,1 wt-%, preferably max 0,05 wt-%, more preferably max 0,03 wt-%.

Silicon (Si) is usually kept very low in ferritic steels for the use as interconnects in solid oxide fuel cells to avoid silicon oxide formation. However, in conventional steel producing process there is always a minor presence of silicon in the steel. To reduce the silicon content below 0,25% usually advanced vacuum melting processes are needed or low silicon scrap material is need for the melting. For the present invention it is no need for either, in the contrary the silicon content should be 0,1-1%, preferably 0,18-0,5 %, more preferably max 0,4 %. However, the Si content may even be present in contents above 0,2 % also long as the majority of the silicon is bonded into particles inside the steel matrix and is not oxidized at the steel surface. This can be accomplished by an appropriate addition of the elements Mo and Nb as discussed further below.

Manganese (Mn) in too high contents will lead to a higher oxidation rate of the steel. However, a small amount of Mn is needed to form a manganese - chromium spinel top-layer on the oxide scale which will reduce the chromium evaporation and also increase the conductivity of the scale. Therefore, the manganese content should be max 0,6 %, preferably max 0,4 %. Preferably, at least 0.2 % Mn is present in the steel.

Chromium (Cr) is added most of all to give a good high temperature corrosion resistance by forming a chromia scale. The amount of chromium can also be varied to tune the thermal expansion of the ferritic alloy. However, for working temperature above 700°C the chromium content should be 20-25 % to avoid chromium depletion from the steel core. According to an embodiment of the invention the chromium content is at least 20%, preferably at least 21 %, most preferably at least 21,5 %. According to the chromium content is maximally 24 %, preferably max 23,5 %.

Nickel (Ni) can be added to the steel to tune the thermal expansion to fit the ceramic components in side the fuel cell. However, too high Ni contents should be avoided to reduce the risk of formation of austenite particles inside the steel. Therefore, the nickel content should be max 2 %. According to an embodiment of the invention, the nickel content is max 1 %, preferably max 0,5 %.

Molybdenum (Mo) is added to increase mechanical strength but also to form Mo silicon rich particles. The formation of silicon rich particles by adding Mo to the steel will lower the electrical resistance of the oxide scale on the steel which in turn will lead to a lower degradation rate of the fuel cell itself. Furthermore, it is expected that Mo may be partly replaced with W while still achieving a similar result, in accordance with common general knowledge. Therefore, the content of molybdenum should be at least 0,5 %. According to an embodiment the content of molybdenum is maximally 1,8 %, preferably max 1,5 %, more preferably max 1,2 %. The most preferred content of molybdenum is at least 0,6 %.

Niobium (Nb) is added to promote the formation of silicon rich particles inside the steel matrix which will lower the electrical resistance of the oxide scale on the steel which in turn will lead to a lower degradation rate of the fuel cell itself. Furthermore, it is expected that Nb may be replaced with Ta while still achieving a similar result, in accordance with common general knowledge. Therefore, the content of niobium (or tantalum and/or vanadium) should be 0,3 up to 1,0 %. According to an embodiment, the niobium content is at least 0,3 %, preferably at least 0,4 %.

Titanium (Ti) is added to steel to improve the adherence of the formed oxide scale. Furthermore, it is also believed that the addition of titanium will dope the formed chromium scale which will increase the conductivity of the chromium oxide. However, no additional effect has been observed for contents above 0,5 % Ti. Therefore, for cost-efficiency the content of titanium should be max 0,5 %, preferably max 0,3 %, more preferably max 0,1 %.

The same effect as with Ti can be achieved by the addition of zirconium to the alloy. The content of Zr +Ti should always be at least 0,2 % in order to achieve the desired well adherent electrical conducting oxide scale.

Zirconium (Zr) is added to steel to improve the adherence of the formed oxide scale. This is to avoid spallation and cracking of the oxide scale. Furthermore, it is expected that Zr may be replaced with Hf, in accordance with common general knowledge, while still achieving a similar result with regard to the adherence. Zr might also improve the silicon rich particle formation inside the steel matrix. Therefore, the content of zirconium should be max 0,5 %. According to an embodiment, the zirconium content is 0,2-0,35 %, preferably 0,2-0,3 %.

Rare Earth Metals (REM) are usually added to material which should have good high temperature corrosion resistance such as alumina formers and is said to block the diffusion at the grain boundaries and by doing so lowering the oxidation rate of the material. In this context, REM are considered to be any metal from the lanthanide elements (element numbers 57 up to 71) and group III elements in the periodic table i.e. Scandium (element 21) and Yttrium (element 39). There is no need for addition of REM in the present alloy, it may however be added in order to further enhance the high temperature corrosion resistance.

Therefore, the content of REM should be max 0,3 %. According to an embodiment, the ferritic chromium steel of the present invention does not contain any addition of REM.

Aluminum (Al) is often added to high temperature resistant alloys since it forms a well protecting alumina scale on the surface of the steel. However, if the application is that the steel should work as a current collector it is absolutely necessary that the formed oxide scale is conducting and not electrically insulating. Therefore, the aluminum content should be max 0,1 %, preferably max 0,05 %.

Nitrogen (N) should be kept low since it will form metal nitrides with the essential alloying elements such as niobium, titanium and zirconium. If Nb, Ti or Zr are bonded to nitrides they will not have the beneficial effect on the adherence of the oxide scale. Therefore, the nitrogen content should be max 0,07 %, preferably max 0,05 %, more preferably max 0,03 %.

Common impurities such as S and P should be kept as low as possible to facilitate the formation of more pure oxides scale. Too high content of impurities might also lead to spallation problems with the oxide scale. Therefore, S and P are preferably kept below 0,008 % of each. The alloy may also contain other impurities as a result of the raw material used and the manufacturing process. The impurities are however in a content which does not substantially affect the properties of the ferritic chromium steel when in use in the intended application.

According to the most preferred embodiment of the present invention, the ferritic steel comprises additions of Mo, Nb and Zr simultaneously. Thereby, silicon rich particles containing Mo and Nb are being formed which avoids formation of a surface oxide containing silicon oxide, and the oxide on the surface has an improved conductivity due to the addition of Zr. Thereby, a superior steel is accomplished having the desired properties, especially a very good electrical surface conductivity.

An example of the most preferred embodiment is a steel with an approximate composition of (in percent by weight):

| | |
|---|---|
| Si | 0,2 |
| Mn | 0,3 |
| Cr | 22 |
| Mo | 1 |
| Nb | 0,4 |
| Zr | 0,3 |
| Ti | 0,05 |
| balance Fe and normally occurring impurities. | |

### Example 1

The contact resistance and the ability to trap the silicon inside the alloy matrix in the form of silicon rich Nb-Mo-Si particles of 3 different melts A, B & C of the alloy of invention were compared with 6 model alloys with chemical compositions close to the alloy of invention. The chemical compositions by weight of the alloying elements of these alloys are given in the table below. The balance is iron and normally occurring impurities.

**Table 1**

| Chemical composition of several melts of the alloy of invention and some model alloys. | | | | | | | | | | |
|---|---|---|---|---|---|---|---|---|---|---|
| Alloy | Si | Mn | Cr | Ni | Mo | Nb | Ti | Zr | Ce | N |
| Alloy of the invention melt A | 0,24 | 0,35 | 22,08 | 0,06 | 1,03 | 0,90 | 0,043 | 0,22 | | 0,019 |
| Alloy of the invention melt B | 0,18 | 0,38 | 22,16 | 1,03 | 1,02 | 0,42 | 0,047 | 0,28 | | 0,018 |
| Alloy of the invention melt C | 0,36 | 0,37 | 22,22 | 0,06 | 0,64 | 0,44 | 0,06 | 0,29 | | 0,015 |
| Model alloy 1 | 0,09 | 0,32 | 21,87 | 0,07 | 0,62 | 0,29 | 0,010 | 0,005 | | 0,022 |
| Model alloy 2 | 0,19 | 0,34 | 21,85 | 0,06 | <0,01 | 0,33 | 0,020 | 0,016 | | 0,023 |
| Model alloy 3 | 0,19 | 0,39 | 22,13 | 0,06 | 1,04 | 0,46 | 0,036 | 0,056 | | 0,081 |
| Model alloy 4 | 0,20 | 0,25 | 22,13 | 0,06 | 1,05 | 0,46 | 0,042 | 0,055 | | |
| Model alloy 5 | 0,16 | 0,39 | 22,0 | 0,06 | 0,15 | 0,03 | 0,02 | <0,02 | 0,03 | |
| Model alloy 6 | 0,16 | 0,39 | 22,09 | 0,06 | 1,04 | 0,35 | 0,018 | 0,040 | 0,06 | 0,022 |

In all the melts of the alloy of invention i.e. melts A, B & C Nb-Mo-Si rich particles were formed inside the alloy matrix. By forming silicon rich particles inside the matrix silicon is hinder to diffuse out to the alloy surface and oxidize under the chromia scale. Only the melt C of alloy of invention with the highest amount of silicon added i.e. 0.36 % showed formation of small amount of silicon oxide formation under the chromia scale. This particular melt of the alloy of invention had the lowest amount of Mo and Nb added compared with the other melts of the alloy of invention. All these melts of the alloy of invention also had more than 0,2 % Zr added.

Model alloy 1 with low silicon content i.e., 0.09 % showed only a slight formation of Nb-Mo-Si particles inside the alloy matrix. The reason for this is the low amount of Nb, Si and Mo added to this model alloy. Furthermore, despite the relatively low Si content it still showed some Si under the formed chromia scale. It should also be pointed out that this model alloy 1 also had a very low addition of Zr.

Model alloy 2 with no Mo added showed no formation of silicon rich particles inside the alloy matrix and it also showed silicon enrichment under the chromia scale. This showing that the addition of only Nb to the alloy will not form silicon enriched particles in side the matrix.

Model alloy 3 with a high N content show the formation a small amount of particles however the addition of nitrogen made the scale spall off and crack. The reason for spallation is cause by the formation of metal nitride of the essential added metal such as Zr.

Model alloy 4 with the addition of a small amount of Al i.e., 0.32 % showed the formation of a thin but well adherent alumina scale. The alloy also formed Nb-Mo-Si rich particles inside the matrix. However, the well electrically insulating aluminum oxide will decrease the efficiency of the fuel cell if this alloys is to be used as interconnect.

Model alloy 5 without any addition of Mo and Nb showed no formation of particles inside the alloy matrix furthermore it also showed an enrichment of silicon under the formed chromia scale.

In model alloy 6 a small amount of silicon enriched particles were observed however the added amounts of Nb, Si and Zr to this alloy are too low. In this particular model alloy also Ce was added to see if there would be any beneficial effect of the addition or REM to the alloy.

Furthermore, the electrical contact resistance of the alloys was tested and the area specific resistance (ASR) was measured for all alloys. The electrical interface resistances between (La, Sr) MnO₃ (LSM) plates and the alloys were measured by a DC four-point method in air at 750°C over a period of 1000 h. A contact layer of (La,Sr)(Mn,Co)O₃ was applied between the alloys and LSM plates. The model alloy with the by far highest increment of the ASR was model alloy 4. The ASR for this model alloy was 2 orders of magnitude higher than the other alloys. The second largest increment of the ASR was observed for the model alloy 5 without any Mo or Nb added.

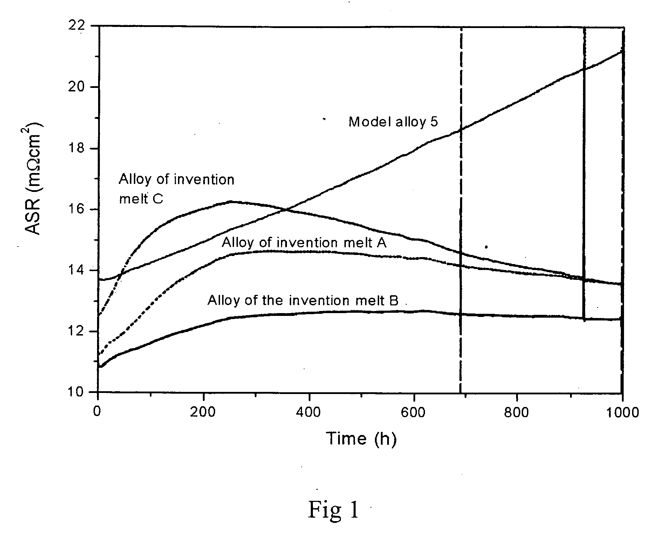

In Fig. 1 the ASR as a function of time is presented and it can clearly be seen that the model alloy 5 without any additions of the essential alloying metals Mo, Nb & Zr has the largest increment of the ASR under a period of 1000 hours. Furthermore, this model alloy 5 has a lower silicon content than the 3 melts A, B & C of the alloy of invention but still the electrical degradation of this alloy is much higher than the melts of the alloy of invention. The Mn content of model alloy 5 is the same as in the A, B and C melts of the alloy of invention.

The by far lowest ASR increments were recorded for the 3 melts A, B & C of the alloy of invention with the highest amount of Zr added and these are also presented in fig 1. Despite the fact that these alloys had the highest amount of silicon added they gave the lowest area specific electrical resistance (ASR).

### Example 2

Coupons of the different melts A, B and C of the alloy of invention with the size 40 x 30 x 0,2 mm as well as one coupon of a commercial available ferritic 22% chromium steel were oxidized in air at 850 °C for 1008 hours. The commercial steel have a nominal chemical composition by weight % of 20-24% Cr, 0,30-0,80% Mn, <0,50% Si, 0,03-0,20 % Ti and 0,04-0,20% La. For the chemical composition of the 3 melts of the alloy of invention please see Table 1. The oxidized coupons were after the oxidation cut in half and polished and inspected by Scanning Electron Microscopy (SEM) and Energy Dispersive Spectroscopy (EDS).

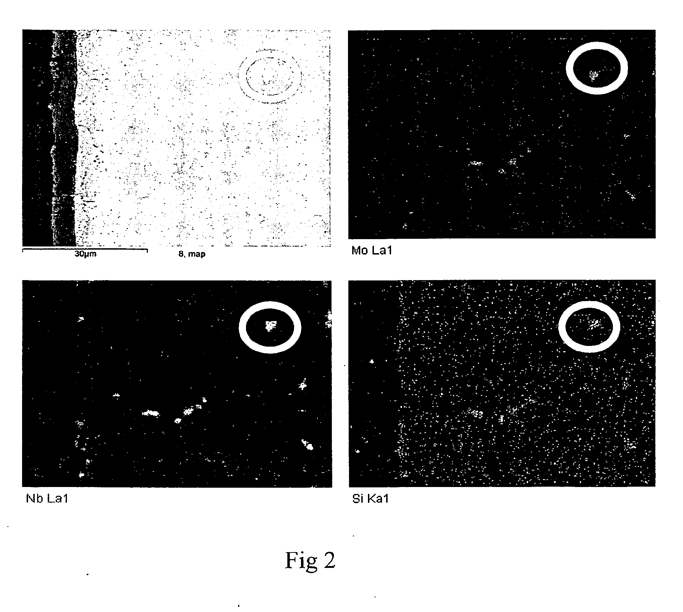

In Figure 2 the cross-sectional SEM micrograph of the melt C of the alloy of invention is shown together with an EDS elemental mapping analysis of Mo, Nb and Si. In respective elements EDS mapping figure, the lighter areas represent a higher concentration of that particularly element. Here it can clearly be seen that the elements Mo, Nb and Si are found in particles inside the alloy matrix. In the SEM micrograph these particle appears lighter due to the higher concentration of heavy elements such as Mo and Nb. One Nb-Mo-Si particle has been circled in Figure 2 to clearer show the effect of the Nb and Mo trapping of silicon in particles inside the alloy matrix.

The chemical analysis of these particles was done by point EDS analysis and the chemical composition of these particles were compared with the chemical composition of the respective melt of the alloy of invention. The results from these experiments were summered in Table 2 below. It can clearly be seen that the particles contains much more silicon than the alloy itself. However, also the molybdenum and the niobium content are increased greatly in these particles. The Si enrichment in these particles is increased by a factor of 10. From this it can be concluded that by adding appropriate amount of both Mo and Nb to a silicon containing ferritic alloy, silicon can be bonded into Nb-Mo-Si rich particles which will prevent the silicon to diffuse out to the surface and oxidize.

**Table 2: Chemical composition (in weight %) of particles compared with the alloy composition.**

| | Cr | Mo | Nb | Si | Fe |
|---|---|---|---|---|---|
| Alloy of the invention melt A | 22,08 | 1,03 | 0,9 | 0,24 | 74,6 |
| Particle | 8,75 | 8,51 | 34,57 | 2,46 | 45,7 |
| Alloy of the invention melt B | 22,16 | 1,02 | 0,42 | 0,18 | 74,5 |
| Particle | 12,36 | 6,03 | 26,81 | 1,94 | 52,86 |
| Alloy of the invention melt C | 22,22 | 0,64 | 0,44 | 0,36 | 75,5 |
| Particle | 8,93 | 6,45 | 36,21 | 3,51 | 44,9 |

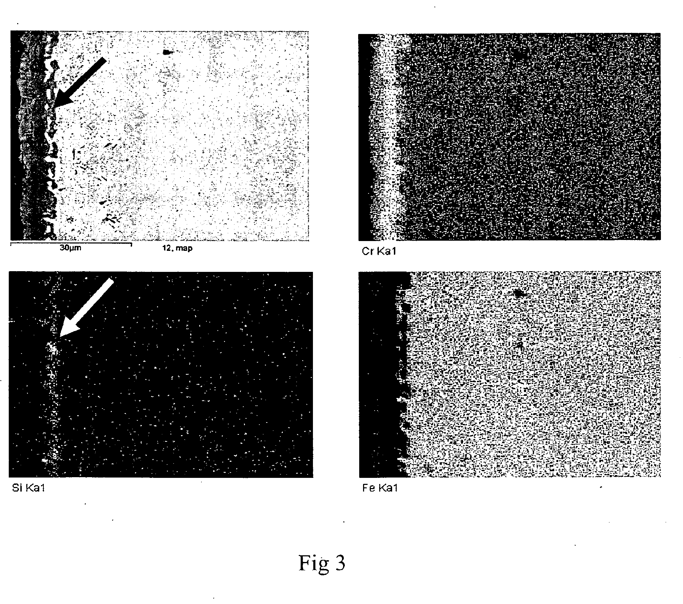

The oxidized commercial available ferritic 22% chromium steel sample was after the oxidation cut in half and polished and inspected by Scanning Electron Microscopy (SEM) and Energy Dispersive Spectroscopy (EDS). In Figure 3 the cross-sectional SEM micrograph of the commercial ferritic 22% chromium steel is shown together with an EDS elemental mapping analysis of Cr, Si and Fe. In respective elements EDS mapping figure, the lighter areas represent a higher concentration of that particularly element. This particular commercial alloy contains no addition of Mo and Nb. Here it can clearly be seen that the small amount of silicon present in the steel is found in string of particles just under the formed chromia scale.

In the SEM micrograph of Figure 3 a black arrow has been added to show exactly where the silicon is enriched under the chromium oxide scale. In the EDS mapping of Si a white arrow is added as a guide to the eye to show the silicon enrichment observed. The formation of silicon oxides at the surface will lead to an increment of the electrical resistance of the surface on the steel. This will in a interconnect in a fuel cell application lead to degradation of the fuel cell efficiency. Furthermore, no silicon rich particles are found inside the alloy matrix.

## Claims

1. Ferritic chromium steel comprising in percent per weight:
| | |
|---|---|
| C | max 0,1 |
| Si | 0,1 - 1 |
| Mn | max 0,6 |
| Cr | 20 - 25 |
| Ni | max 2 |
| Mo, | optionally partly replaced by W, |
| | 0,5 - 1,8 |
| Nb, | optionally at least partly replaced by Ta, |
| | 0,3-1,0 |
| Ti | max 0,5 |
| Zr, | optionally at least partly replaced by Hf, |
| | max 0,5 |
| | wherein the content of Zr+Ti is at least 0,2 % |
| REM | max 0,3 |
| Al | max 0,1 |
| N | max 0,07 |
and balance Fe and normally occurring impurities.

2. Ferritic chromium steel according to claim 1 comprising 21-24 % Cr, preferably 21,5-23,5 %.

3. Ferritic chromium steel according to claims 1 or 2 comprising 0,5-1,5 % Mo.

4. Ferritic chromium steel according to claim 3 comprising 0,6-1,2 % Mo.

5. Ferritic chromium steel according to claim 1 comprising 0,4-1,0 % Nb.

6. Ferritic chromium steel according to any of the preceding claims comprising 0,18-0,5 % Si.

7. Ferritic chromium steel according to claim 6 comprising more than 0,2 to 0,4 % Si.

8. Ferritic chromium steel according to any of the preceding claims comprising 0,20-0,35 % Zr+Ti.

9. Ferritic chromium steel according to any of the preceding claims comprising max 0,3 % Ti, preferably max 0,1 % Ti.

10. Ferritic chromium steel according to claim 8 or 9 comprising 0,2-0,3 % Zr.

11. Ferritic chromium steel according to any of the preceding claims wherein it does not contain any addition of REM.

12. Ferritic chromium steel according to any of the preceding claims comprising max 0.05 % N, preferably max 0,03 % N.

13. Ferritic chromium steel according to any of the preceding claims comprising particles rich in Si.

14. Ferritic chromium steel according to claim 13 wherein the Si-rich particles further comprise Mo and Nb.

15. Ferritic chromium steel according to any of the preceding claims comprising max 1 % Ni, preferably max 0,5 % Ni.

16. Ferritic chromium steel according to any of the preceding claims comprising max 0,05 % C, preferably max 0,03 % C.

17. Ferritic chromium steel according to any of the preceding claims comprising max 0,4 % Mn.

18. Ferritic chromium steel according to any of the preceding claims comprising at least 0,2 % Mn.

19. Ferritic chromium steel according to any of the preceding claims comprising max 0,05 % Al.

20. Ferritic chromium steel according to claim 1 having the following approximate composition in percent by weight:
| | |
|---|---|
| Si | 0,2 |
| Mn | 0,3 |
| Cr | 22 |
| Mo | 1 |
| Nb | 0,4 |
| Zr | 0,3 |
| Ti | 0,05 |
balance Fe and normally occurring impurities.

21. Use of a steel in accordance with any of the preceding claims in fuel cell, such as a solid oxide fuel cell.

22. Fuel cell, such as a solid oxide fuel cell, comprising an interconnect element made of a steel in accordance with any of claims 1-20.

## Patentansprüche

1. Ferritischer Chromstahl, welcher folgende Gewichtsprozente aufweist:
| | |
|---|---|
| C | maximal 0,1 |
| Si | 0,1-9 |
| Mn | maximal 0,6 |
| Cr | 20-25 |
| Ni | maximal 2 |
| Mo, | optional teilweise ersetzt durch W, 0,5-1,8 |
| Nb, | optional teilweise ersetzt durch Ta, 0,3-1,0 |
| Ti | maximal 0,5 |
| Zr, | optional teilweise ersetzt durch Hf, |
| | maximal 0,5, wobei der Gehalt an Zr+Ti zumindest 0,2 % beträgt. |
| REM | maximal 0.3 |
| Al | maximal 0,1 |
| N | maximal 0,07 |
und Im Übrigen Elsen und normalerweise auftretende Verunreinigungen.

2. Ferritischer Chromstahl nach Anspruch 1, welcher 21-24 % Cr, vorzugsweise 21,5-23,5 % Cr aufweist.

3. Ferritischer Chromstahl nach Anspruch 1 oder 2, welcher 0,5-1,5% Mo aufweist.

4. Ferritlscher Chtomstahl nach Anspruch 3, weicher D,B-1,2 % Mo aufweist.

5. Ferritischer Chromstahl nach Anspruch 1, welcher 0,4-1,0 % Nb aufweist.

6. Ferritischer Chromstahl nach einem der vorstehenden Ansprüche, welcher 0,18-0,5 % Si aufweist.

7. Ferritischer Chromstahl nach Anspruch 6, welcher mehr als 0,2 und bis 0,4 ins Si aufweist.

8. Ferritischer Chromstahl nach einem der vorstehenden Ansprüche, welcher 0,2 bis 0,35 % Zr+Ti aufweist.

9. Ferritischer Chromstahl nach einem der vorstehenden Ansprüche, welcher maximal 0,3 % Ti, vorzugsweise maximal 0,1 % Ti aufweist.

10. Ferritischer Chromstahl nach Anspruch 6 oder 9, weicher 0,2-0,3 % Zr aufweist.

11. Ferritischer Chromstahl nach einem der vorstehenden Ansprüche, wobei dieser keinen Zusatz von REM aufweist.

12. Ferritischer Chromstahl nach einem der vorstehenden Ansprüche, welcher maximal 0,5 % N, vorzugsweise maximal 0,03 % N aufweist.

13. Ferritischer Chromstahl nach einem der vorstehenden Ansprüche, welcher Si-reiche Teile aufweist.

14. Ferritischer Chromstahl nach Anspruch 13, wobei die SI-relchen Teilchen weiterhin Mo und Nb aufwelsen.

15. Ferritischer Chromstahl nach einem der vorstehenden Ansprüche, welche maximal 1 % Ni, vorzugsweise maximal 0,5 % Ni aufweist.

16. Ferritischer Chromstahl nach einem der vorstehenden Ansprüche, welcher maximal 0,05 % C, vorzugsweise maximal 0,03 % C aufweist.

17. Ferritlscher Chromstahl nach einem der vorstehenden Ansprüche, welcher maximal 0,4 % Mn aufweist.

18. Ferritischer Chromstahl nach einem der vorstehenden Ansprüche, welcher zumindest 0,2 % Mn aufweist.

19. Ferritischer Chromstahl nach einem der vorstehenden Ansprüche, welcher maximal 0,05 % Al aufweist.

20. Ferritischer Chromstahl nach Anspruch 1, welcher in Gewichtsprozenten näherungsweise die folgende Zusammensetzung hat:
| | |
|---|---|
| Si | 0,2 |
| Mn | 0,3 |
| Cr | 22 |
| Mo | 1 |
| Nb | 0,4 |
| Zr | 0,3 |
| Ti | 0.05 |
und im Übrigen Eisen und normalerweise auftretende Verunreinigungen.

21. Verwendung von Stahl nach einem der vorstehenden Ansprüche In einer Brennstoff zelle, wie zum Beispiel einer massiven Oxldbrennstoffzelle.

22. Brennstoffzelle, wie zum Beispiel massive Oxidbrennstoffzelle, welche ein Verbindungselement aufweist, das aus einem Stahl nach einem der Ansprüche 1 bis 20 hergestellt ist.

## Revendications

1. Acier ferritique au chrome comprenant, en pourcentage en poids :
| | |
|---|---|
| C | maximum 0,1 |
| si | 0,1-1 |
| Mn | maximum 0,6 |
| Cr | 20-25 |
| Ni | maximum 2 |
| Mo | 0,5 - 1,8 éventuellement remplacé partiellement par W |
| Nb | 0,3 1,0 éventuellement au moins remplacé partiellement par Ta |
| Ti | maximum 0,5 |
| Zr | maximum 0,5 éventuellement au moins remplacé partiellement par Hf, |
dans lequel la quantité de Zr+Ti est d'au moins 0,2 %
| | | |
|---|---|---|
| Terres rares métalliques (REM) | | maximum 0,3 |
| Al | maximum 0,1 | |
| N | maximum 0,07 | |
le reste étant constitué de Fe et des impuretés éventuellement présentes.

2. Acier ferritique au chrome selon la revendication 1, comprenant de 21 à 24 % de Cr, de préférence de 21,5 à 23,5 %.

3. Acier ferritique au chrome selon la revendication 1 ou 2 comprenant de 0,5 à 1,5 % de Mo.

4. Acier ferritique au chrome selon la revendication 3, comprenant de 0,6 à 1.2% de Mo.

5. Acier ferritique au chrome selon la revendication 1, comprenant de 0,4 à 1,0 % de Nb.

6. Acier ferritique au chrome selon l'une quelconque des revendications précédentes, comprenant de 0,18 à 0,5 % de Si.

7. Acier ferritique au chrome selon la revendication 6, comprenant plus de 0,2 a 0,4 % de Si.

8. Acier ferritique au chrome selon l'une quelconque des revendications précédentes, comprenant de 0,20 à 0,35 % de Zr+Ti.

9. Acier ferritique au chrome selon l'une quelconque des revendications précédentes, comprenant au maximum 0,3 % de Ti, de préférence au maximum 0,1 % de Ti.

10. Acier ferritique au chrome selon la revendication 8 ou 9, comprenant de 0,2 à 0,3 % de Zr.

11. Acier ferritique au chrome selon l'une quelconque des revendications précédentes, ne comprenant aucune addition de terres rares métalliques (REM).

12. Acier ferritique au chrome selon l'une quelconque des revendications précédentes, comprenant au maximum 0,05 % de N, de préférence au maximum 0,03 % de N.

13. Acier ferritique au chrome selon l'une quelconque des revendications précédentes, comprenant des particules riches en Si.

14. Acier ferritique au chrome selon la revendication 13, dans lequel les particules riches en Si comprennent en outre du Mo et du Nb.

15. Acier ferritique au chrome selon l'une quelconque des revendications précédentes, comprenant au maximum 1 % de Ni, de préférence au maximum 0,5 % de Ni.

16. Acier ferritique au chrome selon l'une quelconque des revendications précédentes, comprenant au maximum 0,05 % de C, de préférence au maximum 0,03 % de C.

17. Acier ferritique au chrome selon l'une quelconque des revendications précédentes, comprenant au maximum 0,4 % de Mn.

18. Acier ferritique au chrome selon l'une quelconque des revendications précédentes, comprenant au moins 0,2 % de Mn.

19. Acier ferritique au chrome selon l'une quelconque des revendications précédentes, comprenant au maximum 0,05 % de Al.

20. Acier ferritique au chrome selon la revendication 1, présentant la composition approximative suivante, en pourcentage en poids :
| | |
|---|---|
| Si | 0,2 |
| Mn | 0,3 |
| Cr | 22 |
| Mo | 1 |
| Nb | 0,4 |
| Zr | 0,3 |
| Ti | 0,05 |
le reste étant constitué de Fe et des impuretés éventuellement présentes.

21. Utilisation d'acier selon l'une quelconque des revendications précédentes dans une pile à combustible, en tant que pile à combustible à oxyde solide.

22. Pile à combustible, telle qu'une pile à combustible à oxyde solide, comprenant un élément d'interconnexion formé d'acier selon l'une quelconque des revendications 1 à 20.
